# EUROPÄISCHE PATENTANMELDUNG

(11) **EP 4 825 660 A1**
(43) Veröffentlichungstag der Anmeldung: **21.10.2026**
(21) Anmeldenummer: 26165310.9
(22) Anmeldetag: 17.03.2026
(51) Int. Cl.: B60P 3/39, B60N 3/00

(54) **BETTGESTELL FÜR EIN FAHRZEUG MIT VERSTELLBAR GELAGERTEN VERBINDUNGSELEMENTEN**

(30) Priorität: 10.04.2025 DE 102025114189
(71) Anmelder: Göckel, Martin, 69254 Malsch (DE); Blum, Franz, 5020 Salzburg (AT)
(72) Erfinder: Göckel, Martin, 69254 Malsch (DE); Blum, Franz, 5020 Salzburg (AT)
(74) Vertreter: Maikowski & Ninnemann Patentanwälte Partnerschaft mbB

(57) **Zusammenfassung**

Bettgestell für ein Fahrzeug, umfassend: mindestens zwei Trägerstrukturen (1a, 1aa, 1b, 1bb) für das Tragen eines Lattenrostes, wobei die mindestens zwei Trägerstrukturen (1a, 1aa, 1b, 1bb) sich parallel zueinander entlang einer Längsachse (L) erstrecken, und orthogonal zu der Längsachse (L) sich Bettlatten (2) des Lattenrostes erstrecken, mindestens eine Leiste (3) zur Verbindung der mindestens zwei Trägerstrukturen (1a, 1aa, 1b, 1bb) miteinander, wobei die mindestens eine Leiste (3) orthogonal zu der Längsachse (L) angeordnet ist und mindestens zwei Aufnahmevorrichtungen (30a, 30b) für die Verbindung der mindestens einen Leiste (3) mit jeweils einer der mindestens zwei Trägerstrukturen (1a, 1aa, 1b, 1bb) umfasst, und mindestens zwei Verbindungselemente (4a, 4b), wobei jedes Verbindungselement (4a, 4b) der mindestens zwei Verbindungselemente (4a, 4b) mit einem ersten Ende in eine der mindestens zwei Aufnahmevorrichtung (30a, 30b) eingeführt ist und mit einem zweiten Ende in eine der mindestens zwei Trägerstrukturen (1a, 1aa, 1b, 1bb) eingeführt ist, um die eine Aufnahmevorrichtung (30a, 30b) mit der einen Trägerstruktur (1a, 1aa, 1b, 1bb) zu verbinden. Das erste Ende jedes Verbindungselementes (4a, 4b) ist dabei entlang der Längsachse (L) verstellbar in der einen Aufnahmevorrichtung (30a, 30b) gelagert, und/oder das zweite Ende jedes Verbindungselementes (4a, 4b) ist entlang der Längsachse (L) verstellbar in der einen Trägerstruktur (1a, 1aa, 1b, 1bb) gelagert.

## Beschreibung

Die vorgeschlagene Lösung betrifft ein Bettgestell für ein Fahrzeug mit verstellbar gelagerten Verbindungselementen zur variablen Längenanpassung des Bettgestells entlang einer Längsachse. Die vorliegende Lösung betrifft insbesondere Bettgestelle, die in Wohnmobilen oder Wohnwagen montierbar sind.

Es ist bereits grundsätzlich bekannt, in Transportern, Wohnmobilen oder Wohnwagen Bettgestelle zu montieren. Diese Bettgestelle können dabei entlang einer Achse, die sich orthogonal zur Fahrtrichtung des Fahrzeuges erstreckt, montiert werden. Typischerweise werden die Bettgestelle dabei an den Seitenwänden des Fahrzeuges montiert, beispielsweise über eine Befestigung an einer Lochwand des Fahrzeuges. In vielen Fahrzeugen ist der Abstand zwischen den Seitenwänden des Fahrzeuges uneinheitlich, so ist typischerweise der Abstand zwischen den Seitenwänden nahe der Fahrzeugdecke aufgrund von aerodynamischen Faktoren geringer. Die Höhe, in der bekannte Bettgestelle dann entlang einer Querachse im Fahrzeug montiert werden können, ist daher typischerweise abhängig von der Länge des Bettgestells und dem Abstand der Seitenwände des Fahrzeuges voneinander in einer bestimmten Höhe.

Zudem können die Abstände zwischen den Seitenwände je nach Fahrzeugtyp und Fahrzeughersteller sehr unterschiedlich sein. Dementsprechend kann es sein, dass ein Bettgestell, das in ein Fahrzeug eines ersten Fahrzeugtyps einbaubar ist, nicht in ein Fahrzeug eines zweiten Fahrzeugtyps einbaubar ist.

Es besteht somit Bedarf für ein Bettgestell, das variabler in ein Fahrzeug einbaut werden kann, insbesondere in unterschiedliche Fahrzeugtypen und in verschiedenen Höhen innerhalb eines Fahrzeuges.

Hier schafft ein vorgeschlagenes Bettgestell Abhilfe.

Das vorgeschlagene Bettgestell umfasst mindestens zwei Trägerstrukturen für das Tragen eines Lattenrostes. Die mindestens zwei Trägerstrukturen erstrecken sich dabei parallel zueinander entlang einer Längsachse, orthogonal zu der Längsachse erstrecken sich Bettlatten des Lattenrostes. Die Bettlatten sind insbesondere so angeordnet, dass sie mit einem ersten Ende auf einer Trägerstruktur der mindestens zwei Trägerstrukturen liegen, und mit einem zweiten Ende auf einer anderen Trägerstruktur der mindestens zwei Trägerstrukturen liegen.

Ferner umfasst das Bettgestell mindestens eine Leiste zur Verbindung der mindestens zwei Trägerstrukturen miteinander. Die mindestens eine Leiste ist dabei orthogonal zu der Längsachse angeordnet. Darüber hinaus umfasst die mindestens eine Leiste mindestens zwei Aufnahmevorrichtungen für die Verbindung der mindestens einen Leiste mit jeweils einer der mindestens zwei Trägerstrukturen. Die Bettlatten können parallel zu der mindestens einen Leiste angeordnet sein.

Zusätzlich umfasst das Bettgestell mindestens zwei Verbindungselemente. Jedes Verbindungselement der mindestens zwei Verbindungselemente ist mit einem ersten Ende in eine der mindestens zwei Aufnahmevorrichtung eingeführt und mit einem zweiten Ende in eine der mindestens zwei Trägerstrukturen eingeführt, um die eine Aufnahmevorrichtung mit der einen Trägerstruktur zu verbinden. Die mindestens eine Leiste ist daher mit den mindestens zwei Trägerstrukturen über die mindestens zwei Aufnahmevorrichtungen der mindestens einen Leiste verbunden. Eine Länge des Bettgestells kann beispielsweise bestimmt werden über ein Aufsummieren einer Länge der mindestens zwei Trägerstrukturen, einer Länge der mindestens zwei Aufnahmevorrichtungen und einem Abstand zwischen den mindestens zwei Trägerstrukturen und den mindestens zwei Aufnahmevorrichtungen. Wenn das Bettgestell beispielsweise nur aus zwei Trägerstrukturen besteht, kann eine Länge der mindestens einen Leiste einer Breite des Bettgestells entsprechen.

Außerdem ist das erste Ende jedes Verbindungselementes entlang der Längsachse verstellbar in der einen Aufnahmevorrichtung gelagert. Zusätzlich oder alternativ ist das zweite Ende jedes Verbindungselementes entlang der Längsachse verstellbar in der einen Trägerstruktur gelagert. Durch die verstellbare Lagerung jedes Verbindungselementes entlang der Längsachse kann die Länge des Bettgestells variiert werden, indem ein Abstand der einen Aufnahmevorrichtung zu der einen Trägerstruktur verringert wird, verringert sich auch die Länge des Bettgestells, wird der Abstand wiederum erhöht, vergrößert sich die Länge des Bettgestells. Eine geringste Länge des Bettgestells kann dabei erreicht werden, wenn jedes Verbindungselement vollständig eingeführt ist in die eine Aufnahmevorrichtung und die eine Trägerstruktur. Eine maximale Länge des Bettgestells kann erreicht werden, wenn jedes Verbindungselement mit dem ersten Ende so geringfügig wie möglich in die eine Aufnahmevorrichtung eingeführt ist und mit dem zweiten Ende so geringfügig wie möglich in die eine Trägerstruktur eingeführt ist. Eine so geringfügig wie mögliche Einführung beschreibt dabei beispielsweise eine Einführung jedes Verbindungselements in die eine Aufnahmevorrichtung beziehungsweise in die eine Trägerstruktur nur insoweit, dass die Verbindung zwischen jedem Verbindungselement und der einen Aufnahmevorrichtung beziehungsweise der einen Trägerstruktur noch stabil ist.

Das Bettgestell kann beispielsweise zwei Leisten mit jeweils mindestens zwei Aufnahmevorrichtungen umfassen. Bei einem solchen Bettgestell kann der Abstand zwischen den mindestens zwei Aufnahmevorrichtungen der einen Leiste und den mindestens zwei Trägerstrukturen größer, gleich oder kleiner sein als der Abstand zwischen den mindestens zwei Aufnahmevorrichtungen der anderen Leiste und den mindestens zwei Trägerstrukturen, da die jeweiligen mindestens zwei Aufnahmevorrichtungen jeweils über die verstellbar gelagerten mindestens zwei Verbindungselemente mit den mindestens zwei Trägerstrukturen verbunden sind. In dem Fall kann die Gesamtlänge des Bettgestells also an zwei Stellen über die jeweiligen mindestens zwei Verbindungselemente angepasst werden, dies ermöglicht eine höhere Variabilität.

Alternativ kann das Bettgestell eine Leiste mit mindestens zwei Aufnahmevorrichtungen umfassen und einer zweiten Leiste, die andersartig mit den mindestens zwei Trägerstrukturen verbunden ist, beispielsweise über Vorrichtungen, die direkt mit den mindestens zwei Trägerstrukturen verbunden sind, anstatt über mindestens zwei Verbindungselemente. In dem Fall kann die Länge des Bettgestells nur an einer Seite, nämlich der Seite mit der Leiste mit mindestens zwei Aufnahmevorrichtungen über die Verstellung der mindestens zwei Verbindungselemente erfolgen. Dies ermöglicht zwar eine geringere Variabilität, verringert jedoch die Komplexität, da nur an einer Seite eine Verstellung möglich ist.

Die mindestens zwei Trägerstrukturen, die mindestens zwei Aufnahmevorrichtungen, die mindestens zwei Verbindungselemente und/oder die mindestens eine Leiste können beispielsweise ein Metall umfassen oder aus einem Metall bestehen. Die Verwendung von Metall für alle oder einzelne Bestandteile des Bettgestells kann die Stabilität des Bettgestells erhöhen.

In einer Ausführungsvariante sind die mindestens zwei Aufnahmevorrichtungen jeweils mit einem Profilteil ausgebildet. Das jeweilige Profilteil der mindestens zwei Aufnahmevorrichtungen kann einer stabilen Halterung und Lagerung des ersten Endes des jeweiligen Verbindungselementes dienen. Das jeweilige Profilteil der mindestens zwei Aufnahmevorrichtungen kann im Querschnitt eine geometrische Form aufweisen, insbesondere kann das jeweilige Profilteil der mindestens zwei Aufnahmevorrichtungen im Querschnitt eine kreisförmige, quadratische, rechteckige, dreieckige, fünfeckige sechseckige oder achteckige Form aufweisen.

In einer Ausführungsvariante ist das erste Ende jedes Verbindungselementes über einen Formschluss an dem jeweiligen Profilteil der Aufnahmevorrichtung gehalten und verschieblich gelagert. Eine solche formschlüssige Halterung und Lagerung des ersten Endes jedes Verbindungselementes führt zu einer stabileren Halterung und Lagerung jedes Verbindungselementes.

In einer Ausführungsvariante sind die mindestens zwei Trägerstrukturen jeweils mit einem Profilteil ausgebildet. Das jeweilige Profilteil der mindestens zwei Trägerstrukturen kann einer stabilen Halterung und Lagerung des zweiten Endes des jeweiligen Verbindungselementes dienen. Das jeweilige Profilteil der mindestens zwei Trägerstrukturen kann im Querschnitt eine geometrische Form aufweisen, insbesondere kann das jeweilige Profilteil der mindestens zwei Trägerstrukturen im Querschnitt eine kreisförmige, quadratische, rechteckige, dreieckige, fünfeckige, sechseckige oder achteckige Form aufweisen.

Das jeweilige Profilteil der mindestens zwei Trägerstrukturen kann dem jeweilige Profilteil der mindestens zwei Aufnahmevorrichtungen entsprechen, das jeweilige Profilteil der mindestens zwei Trägerstrukturen kann aber auch anders ausgeformt sein. Das erste Ende jedes Verbindungselementes kann sich von dem zweiten Ende des Verbindungselementes unterscheiden. Unterschiedliche erste und zweite Enden der mindestens zwei Verbindungselemente können nützlich sein, wenn das jeweilige Profilteil der mindestens zwei Trägerstrukturen anders als das jeweilige Profilteil der mindestens zwei Aufnahmevorrichtungen ausgestaltet ist. Denn dann können durch die unterschiedlichen ersten und zweiten Enden der mindestens zwei Verbindungselemente das erste Ende jedes Verbindungselementes in der jeweiligen Aufnahmevorrichtung formschlüssig gehalten und hierin verschieblich gelagert werden und gleichzeitig das zweite Ende jedes Verbindungselementes in der jeweiligen Trägerstruktur formschlüssig gehalten und hierin verschieblich gelagert werden.

In einer Ausführungsvariante ist das zweite Ende jedes Verbindungselementes über einen Formschluss an dem jeweiligen Profilteil der Trägerstruktur gehalten und verschieblich gelagert. Eine solche formschlüssige Halterung und Lagerung des zweiten Endes jedes Verbindungselementes führt zu einer stabileren Halterung und Lagerung jedes Verbindungselementes.

In einer Ausführungsvariante ist das Profilteil einer Trägerstruktur länger ist als das Profilteil einer Aufnahmevorrichtung. Durch das längere Profilteil einer Trägerstruktur kann die Stabilität des Bettgestells erhöht werden.

In einer Ausführungsvariante umfasst jedes Verbindungselement mehrere Öffnungen zur Befestigung der Bettlatten. Die mehreren Öffnungen können Gewindebohrungen umfassen. In Gewindebohrungen kann eine Schraube eingeschraubt werden. Durch die Nutzung von Schrauben können die Bettlatten stabil an jedem Verbindungselement befestigt werden.

In einer Ausführungsvariante weisen die mindestens zwei Aufnahmevorrichtungen jeweils mindestens eine Durchgangsöffnung auf, über die Öffnungen an dem ersten Ende zugänglich sind, und die mindestens zwei Trägerstrukturen weisen jeweils mindestens eine Durchgangsöffnung auf, über die Öffnungen an dem zweiten Ende zugänglich sind. Demnach sind die mehreren Öffnungen, unabhängig davon, wie tief jedes Verbindungselement in die eine Aufnahmevorrichtung beziehungsweise in die eine Trägerstruktur eingeführt ist, immer zugänglich und somit können prinzipiell immer alle Öffnungen der mehreren Öffnungen für die Befestigung der Bettlatten genutzt werden. Eine befestigte Bettlatte kann aber benachbarte Öffnungen einer Öffnung, an der die befestigte Bettlatte befestigt ist, verdecken und damit den Zugang zu diesen versperren. Eine höhere Anzahl an Öffnungen als eventuell genutzt werden können, erhöht die Variabilität der Anbringungsmöglichkeiten der Bettlatten.

In einer Ausführungsvariante umfasst jedes Profilteil der mindestens zwei Aufnahmevorrichtungen die mindestens eine Durchgangsöffnung, insbesondere vier Durchgangsöffnungen. Die mindestens eine Durchgangsöffnung der Aufnahmevorrichtungen kann T-förmig ausgestaltet sein. Die T-förmigen Durchgangsöffnungen der Aufnahmevorrichtungen sind beispielsweise als längserstreckte T-Nuten ausgeführt. Jedes Verbindungselement kann in dieser Ausführungsvariante im Querschnitt T-förmige Formschlusselemente aufweisen, die formschlüssig in einer T-förmigen Durchgangsöffnung der Aufnahmevorrichtungen gehalten und hierin verschieblich gelagert sind.

In einer Ausführungsvariante umfasst jedes Profilteil der mindestens zwei Trägerstrukturen die mindestens eine Durchgangsöffnung, insbesondere vier Durchgangsöffnungen. Die mindestens eine Durchgangsöffnung der Trägerstrukturen kann T-förmig ausgestaltet sein. Die T-förmigen Durchgangsöffnungen der Trägerstrukturen sind beispielsweise als längserstreckte T-Nuten ausgeführt. Jedes Verbindungselement kann in dieser Ausführungsvariante im Querschnitt T-förmige Formschlusselemente aufweisen, die formschlüssig in einer T-förmigen Durchgangsöffnung der Trägerstrukturen gehalten und hierin verschieblich gelagert sind.

In einer Ausführungsvariante umfasst das Bettgestell ein Fixierungselement, über das ein Verbindungselement in einer Verstellposition in der jeweiligen Aufnahmevorrichtungen oder in einer Verstellposition in der jeweiligen Trägerstruktur fixiert wird. Es ist vorteilhaft, dass so bald eine gewünschte Bettlänge eingestellt ist durch die Verstellung der mindestens zwei Verbindungselemente, diese gewünschte Bettlänge zu fixieren. Das Fixierungselement kann dabei einen Klemmstein umfassen oder einen Gewindestift.

In einer Ausführungsvariante umfasst das Fixierungselement einen Klemmstein, wobei der Klemmstein ein Bestandteil umfasst, der formschlüssig in den Profilteil einer Trägerstruktur einführbar ist.

In einer Ausführungsvariante fixiert das Einschrauben der Bettlatten in die mehreren Öffnungen von jedem Verbindungselement in einer Verstellposition in der jeweiligen Aufnahmevorrichtungen und/oder in einer Verstellposition in der jeweiligen Trägerstruktur. Durch das Befestigten der Bettlatten mittels Schrauben in den Öffnungen an dem ersten Ende wird jedes Verbindungselement in einer Verstellposition in der jeweiligen Aufnahmevorrichtung fixiert. Ebenso wird durch das Befestigen der Bettlatten mittels Schrauben in den Öffnungen an dem zweiten Ende jedes Verbindungselement in einer Verstellposition in der jeweiligen Trägerstruktur fixiert. Umso mehr Schrauben in den Öffnungen der mehreren Öffnungen, die von dem ersten Ende beziehungsweise zweiten Ende umfasst sind, eingeschraubt sind, umso stabiler ist eine solche Fixierung. Eine solche Fixierung kann mit dem Fixierungselement kombiniert werden.

In einer Ausführungsvariante ist das Bettgestell werkzeuglos in seine einzelnen Bestandteile zerlegbar. Insbesondere ist die mindestens eine Leiste von den mindestens zwei Verbindungselementen werkzeuglos entfernbar. Die mindestens eine Leiste kann zusammen mit ihren mindestens zwei Aufnahmevorrichtungen von den mindestens zwei Verbindungselementen werkzeuglos gelöst werden, indem die ersten Enden der mindestens zwei Verbindungselemente aus den mindestens zwei Aufnahmevorrichtung herausgezogen werden. Ebenso können die mindestens zwei Verbindungselemente von den mindestens zwei Trägerstrukturen werkzeuglos entfernt werden, indem die zweiten Enden der mindestens zwei Verbindungselemente aus den mindestens zwei Trägerstrukturen herausgezogen werden. Der Vorteil einer solchen einfachen Zerlegung ist der, dass das Bettgestell einfach zu transportieren ist und/oder platzsparend eingelagert, verstaut oder verpackt werden kann.

In einer Ausführungsvariante sind die mindestens zwei Aufnahmevorrichtungen der mindestens einen Leiste werkzeuglos entfernbar. Dadurch, dass die mindestens zwei Aufnahmevorrichtungen der mindestens einen Leiste lösbar sind ohne die Verwendung von Werkzeugen, können die mindestens zwei Aufnahmevorrichtungen unabhängig von der mindestens einen Leiste transportiert werden. Zudem ermöglicht dies eine platzsparende Einlagerung, Verstauung oder Verpackung der mindestens einen Leiste und der mindestens zwei Aufnahmevorrichtungen.

In einer Ausführungsvariante umfasst das Bettgestell mindestens vier Trägerstrukturen und zwei der mindestens vier Trägerstrukturen sind entlang einer Querachse, die orthogonal zu der Längsachse verläuft, von einer ersten Position in eine zweite Position verstellbar, in der über das Bettgestell eine größere Liegefläche definiert ist als in der ersten Position. Durch die Nutzung von mindestens vier Trägerstrukturen, von denen mindestens zwei entlang der Querachse verstellbar sind, kann die Liegefläche des Bettgestells vergrößert werden, insbesondere kann das Bettgestell von einem Einzelbettgestell in ein Doppelbettgestell verstellt werden. Demnach ist das Bettgestell nicht nur in der Bettlänge variabel, sondern auch in seiner Breite.

In einer Ausführungsvariante ist das Bettgestell an zwei gegenüberliegenden Lochwänden des Fahrzeuges über Befestigungselemente befestigbar, die an der mindestens einen Leiste angeordnet sind. Eine Lochwand beschreibt typischerweise eine Wandung, die sich durch mehrere Befestigungslöcher auszeichnet, wobei über die mehreren Befestigungslöcher Bauteile montiert werden können. Vorliegend kann das Bettgestell in diesen mehreren Befestigungslöchern montiert werden.

Ein weiterer Aspekt der vorliegenden Offenbarung umfasst ein Fahrzeug mit einem in einem Innenraum des Fahrzeuges eingebauten Bettgestell wie zuvor beschrieben.

In einer Ausführungsvariante ist das Bettgestell quer zur Fahrtrichtung des Fahrzeuges eingebaut. Der Einbau eines Bettgestells quer zur Fahrtrichtung kann beispielsweise dadurch erfolgen, dass das Bettgestell über seine Breite, beispielsweise über die mindestens eine Leiste, an den Lochwänden befestigt wird. Durch den Einbau des Bettgestells quer zur Fahrtrichtung kann Platz an den Lochwänden eingespart werden, wenn die Länge des Bettgestells größer ist als die Breite des Bettgestells. Denn dann liegt ein größerer Bereich der Lochwände frei, als wenn das Bettgestell über die Länge an einer der zwei gegenüberliegenden Lochwänden befestigt werden würde.

In einer Ausführungsvariante ist das Bettgestell in verschiedenen Höhen in dem Fahrzeug einbaubar. Wie zuvor bereits dargestellt, kann der Abstand zwischen den Seitenwänden innerhalb eines Fahrzeuges uneinheitlich sein, durch die Anpassung der Länge des Bettgestells über die Verstellbarkeit der mindestens zwei Verbindungselemente kann das Bettgestell so angepasst werden, dass es in der Höhe einbaubar ist, die ein Nutzer sich wünscht. Wenn mehrere Bettgestelle in einem Fahrzeug benötigt werden, so können mehrere Bettgestelle auf unterschiedlichen Höhen im Innenraum des Fahrzeuges eingebaut werden.

Die beigefügten Figuren veranschaulichen exemplarisch mögliche Ausführungsvarianten der vorgeschlagenen Lösung.

Hierbei zeigen:
- Figur 1: drei vorgeschlagenen Bettgestelle eingebaut in einem Fahrzeug in drei unterschiedlichen Höhen;
- Figur 2: eine Ausführungsvariante eines vorgeschlagenen Bettgestells mit vier Trägerstrukturen;
- Figur 3: das Bettgestell der Figur 2 mit verstellten Trägerstrukturen zur Veranschaulichung der Verstellung von Trägerstrukturen;
- Figur 4: das Bettgestell der Figur 3 mit verstellten Trägerstrukturen zur Veranschaulichung des Bettgestells als Doppelbett;
- Figur 5: in vergrößerten Maßstab des Bettgestells der Figur 2 mit Blick auf eine Trägerstruktur verbunden mit einer Aufnahmevorrichtung einer Leiste über ein Verbindungselement;
- Figur 6: einen Ausschnitt einer Leiste eines vorgeschlagenen Bettgestells mit einer Aufnahmevorrichtung und einem Verbindungselement;
- Figur 7: die Leiste der Figur 6 mit zwei Aufnahmevorrichtungen und zwei Verbindungselementen;
- Figur 8: ein Querschnitt einer Aufnahmevorrichtung und einer Trägerstruktur eines vorgeschlagenen Bettgestells zur Veranschaulichung eines Profilteils der Aufnahmevorrichtung und eines Profilteils der Trägerstruktur;
- Figur 9: ein Querschnitt der Leiste und der Trägerstruktur der Figur 8 zur Veranschaulichung eines Fixierungselementes;
- Figur 10: eine perspektivische Seitenansicht eines Ausschnitts eines vorgeschlagenen Bettgestells zu Veranschaulichung eines Abstandes zwischen einer Aufnahmevorrichtung mit einer Trägerstruktur.

Im Folgenden werden, sofern nicht anders vermerkt, für gleiche und gleichwirkende Elemente gleiche Bezugszeichen verwendet.

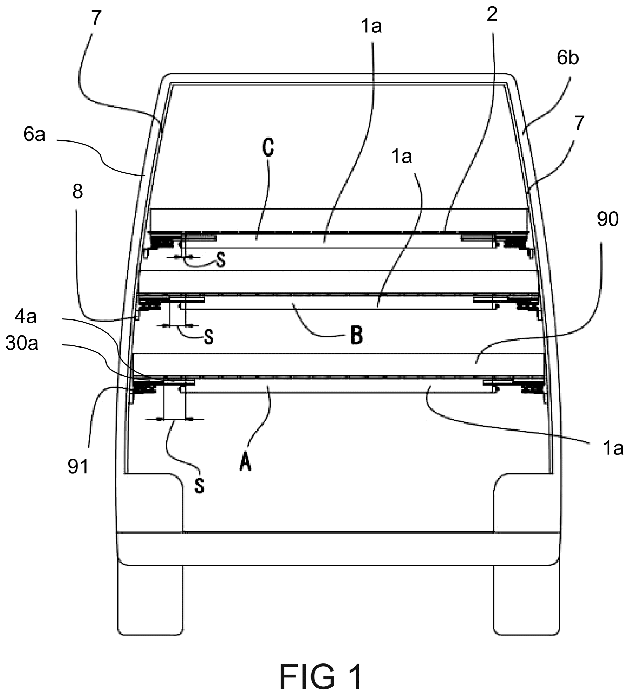

Die Figur 1 zeigt ein Fahrzeug, in dem drei Bettgestelle A, B, C, die gemäß der vorgeschlagenen Lösung ausgebildet sind, in unterschiedlichen Höhen eingebaut sind. Die drei Bettgestelle A, B, C sind dabei in einer Achse, die sich orthogonal zu einer Fahrzeuglängsachse und damit einer Fahrtrichtung erstreckt, übereinander eingebaut. Das Fahrzeug umfasst zwei Seitenwände 6a, 6b, die zur Fahrzeugdecke hin abgerundet sind, daher variiert im Innenraum des Fahrzeugs, in dem die Bettgestelle A, B, C montiert sind, ein Abstand zwischen den Seitenwänden 6a, 6b, wobei der Abstand zwischen den Seitenwänden 6a, 6b zu Decke hin geringer wird.

In der Figur 1 ist eine Lochwand 7 des Fahrzeuges dargestellt, die sich entlang beider Seitenwände 6a, 6b und der Fahrzeugdecke erstreckt. Die drei Bettgestelle A, B, C sind in der Lochwand 7 über Befestigungselemente 8 befestigt. In der Figur 1, ist für jedes der drei Bettgestelle A, B, C eine Trägerstruktur 1a von mindestens zwei Trägerstrukturen 1a, 1b dargestellt. Die Trägerstruktur 1a ist dabei in der Achse, die sich orthogonal zu einer Fahrzeuglängsachse und damit einer Fahrtrichtung erstreckt, angeordnet. Die mindestens zwei Trägerstrukturen 1a, 1b dienen dem Tragen eines Lattenrostes mit einer Vielzahl an Bettlatten 2. Auf allen drei Bettgestellen A, B, C liegt in Figur 1 eine Matratze 90.

Die Trägerstrukturen 1a der drei Bettgestelle A, B, C sind in der Figur 1 über ein jeweiliges Verbindungselement 4a mit einer Aufnahmevorrichtung 30a verbunden. Jedes Verbindungselement 4a verbindet dabei die jeweilige Trägerstruktur 1a mit der jeweiligen Aufnahmevorrichtung 30a, indem das Verbindungselement 4a mit einem ersten Ende in die jeweilige Aufnahmevorrichtung 30a und mit einem zweiten Ende in die jeweilige Trägerstruktur 1a eingeführt ist, insbesondere eingesteckt ist. Je tiefer das Verbindungselement 4a in der Aufnahmevorrichtung 30a und/oder der Trägerstruktur 1a eingeführt ist, desto kleiner ist ein Abstand S zwischen der jeweiligen Trägerstruktur 1a und der Aufnahmevorrichtung 30a. Je kleiner der Abstand S zwischen der jeweiligen Trägerstruktur 1a und der Aufnahmevorrichtung 30a ist, desto kleiner ist eine Gesamtlänge des jeweiligen Bettgestells A, B, C. Hierdurch kann jedes Bettgestell A, B, C in unterschiedlichen Höhen im Innenraum des Fahrzeugs eingebaut werden, da es an die unterschiedlichen Abstände der Seitenwände 6a, 6b des Fahrzeuges anpassbar ist.

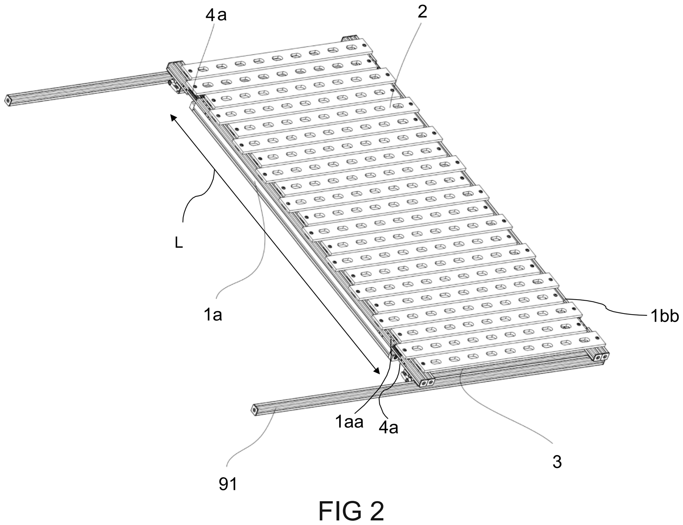

Die Figuren 2, 3 und 4 zeigen ein Bettgestell A, B, C, das gemäß der vorgeschlagenen Lösung ausgebildet ist, mit vier Trägerstrukturen 1a, 1aa, 1b, 1bb, die sich jeweils entlang einer Längsachse L erstrecken. Jede Trägerstruktur 1a, 1aa, 1b, 1bb ist über jeweils zwei Verbindungselemente 4a, 4b mit jeweils zwei Aufnahmevorrichtungen 30a, 30b verbunden, wobei die jeweiligen zwei Aufnahmevorrichtungen 30a, 30b jeweils auf einer Leiste 3 angeordnet sind. Die Leisten 3 sind orthogonal zu der Längsachse L angeordnet.

Auf den Trägerstrukturen 1a, 1aa, 1b, 1bb befindet sich ein Lattenrost mit einer Vielzahl an Bettlatten 2. Zwei benachbarte Bettlatten 2 sind dabei auf zwei unterschiedlichen, nicht benachbarten Trägerstrukturen 1a, 1aa, 1b, 1bb befestigt, sodass die Bettlatten 2 orthogonal zur Längsachse L angeordnet sind.

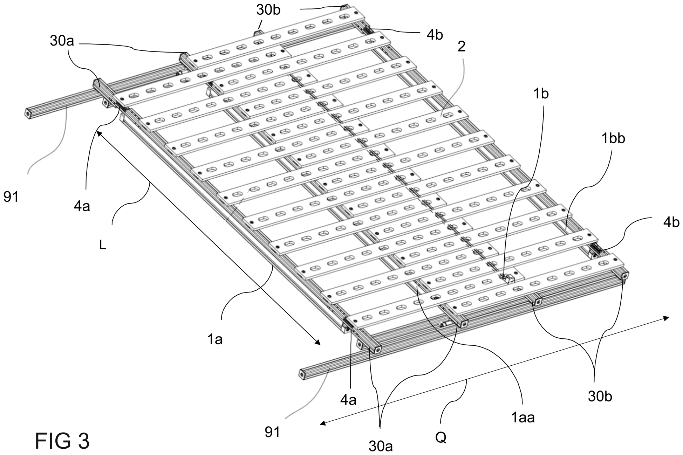

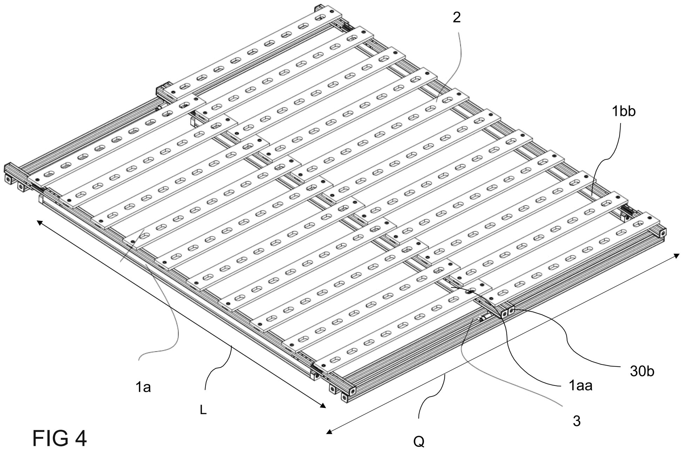

In den Figuren 2, 3 und 4 wird die Verstellung von zwei der vier Trägerstrukturen 1a, 1aa, 1b, 1bb entlang einer Querachse Q, die sich orthogonal zu der Längsachse L erstreckt, von einer ersten Position in eine zweite Position veranschaulicht. Diese Verstellung erfolgt dabei entlang zweier Schienen 91. Zwei verstellbare Trägerstrukturen 1a, 1b der vier Trägerstrukturen 1a, 1aa, 1b, 1bb können entlang der Querachse Q verstellt werden. Figur 2 zeigt dabei das Bettgestell A, B, C mit den zwei verstellbaren Trägerstrukturen 1a, 1b in der ersten Position, Figur 4 das Bettgestell A, B, C mit den zwei verstellbaren Trägerstrukturen 1a, 1b in der zweiten Position und Figur 3 zeigt die Verstellung der zwei verstellbaren Trägerstrukturen 1a, 1b von der ersten Position in die zweite Position.

Zwei äußere Trägerstrukturen 1a, 1bb der vier Trägerstrukturen 1a, 1aa, 1b, 1bb sind die zwei Trägerstrukturen, die nur zu einer anderen der vier Trägerstrukturen 1a, 1aa, 1b, 1bb benachbart sind. Die Leisten 3 und die zwei äußere Trägerstrukturen 1a, 1bb können eine Liegefläche definieren. Die Liegefläche des in Figur 2 dargestellten Bettgestells A, B, C entspricht dem eines Einzelbettgestells. Die Liegefläche des in Figur 4 dargestellten Bettgestells A, B, C weist eine größere Liegefläche auf als das in Figur 2 dargestellte Bettgestell A, B, C. So entspricht beispielsweise die Liegefläche des in Figur 4 dargestellten Bettgestells A, B, C dem eines Doppelbettgestells.

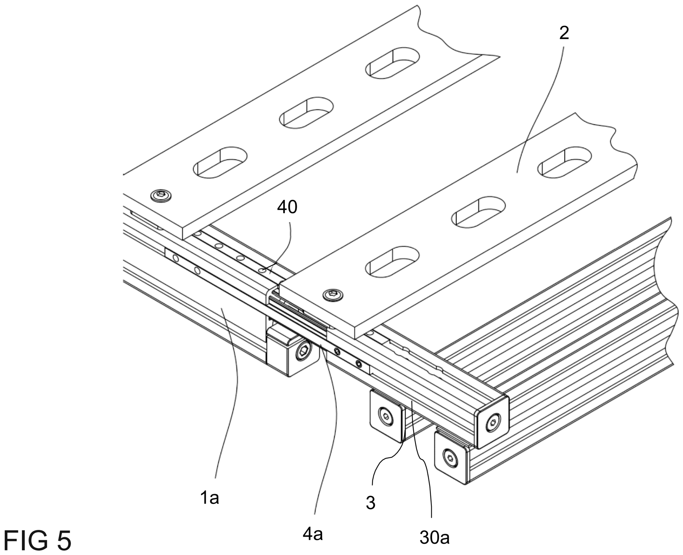

Die Figur 5 zeigt einen Ausschnitt eines Bettgestells A, B, C der in den Figuren 2, 3 und 4 dargestellten vorgeschlagenen Lösung, wobei der Ausschnitt ein Verbindungselement 4a zeigt, das mit einem ersten Ende eingeführt ist in eine Aufnahmevorrichtung 30a einer Leiste 3 und das mit dem zweiten Ende eingeführt ist in eine Trägerstruktur 1a. Das Verbindungselement weist dabei mehrere Öffnungen 40 auf. Zudem weist das hier dargestellte Verbindungselement 4a mehrere Außenseiten auf. Die mehreren Öffnungen 40 sind dabei auf einer Außenseite der mehreren Außenseiten angeordnet, und zwar auf der Außenseite, die den Bettlatten 2, die auf den Trägerstrukturen 1a, 1aa, 1b, 1bb liegen, zugewandt ist. Über die mehreren Öffnungen 40 können Bettlatten 2 mit dem Verbindungselement 4a verbunden werden, zum Beispiel können die Bettlatten 2 in die mehreren Öffnungen 40 mittels einer Schraube eingeschraubt werden. Die mehreren Öffnungen 40 können auch auf dem ersten oder zweiten Ende des Verbindungselementes 4a angeordnet sein. Auch wenn das erste Ende beziehungsweise das zweite Ende des Verbindungselementes 4a in die Aufnahmevorrichtung 30a beziehungsweise in der Trägerstruktur 1a eingeführt ist, sind die Öffnungen 40, die auf diesen jeweiligen Enden angeordnet sind, noch zugänglich über eine Durchgangsöffnung 31 der Aufnahmevorrichtung 30a sowie über eine Durchgangsöffnung 11 der Trägerstruktur 1a. Dadurch, dass die Öffnungen 40 zugänglich sind, sind die Bettlatten 2 auch mit dem eingeführten ersten beziehungsweise mit dem eingeführten zweiten Ende des Verbindungselementes 4a verbindbar.

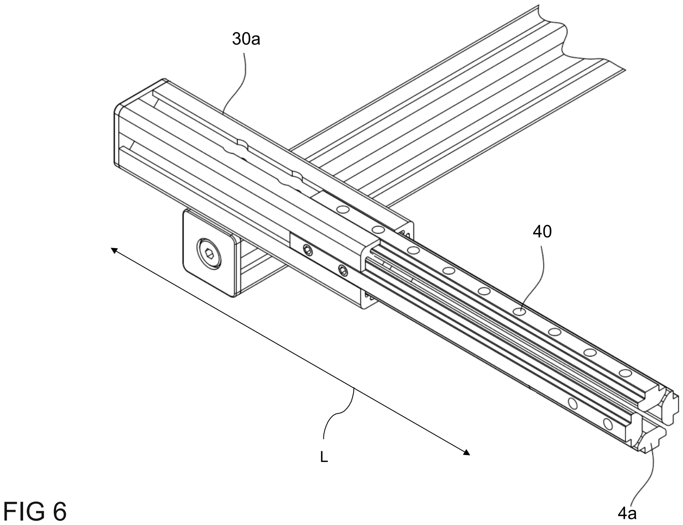

Die Figur 6 zeigt einen Ausschnitt einer Leiste 3 eines vorgeschlagenen Bettgestells A, B, C mit einer Aufnahmevorrichtung 30a und einem Verbindungselement 4a. Die Aufnahmevorrichtung 30a ist auf einem Ende der Leiste 3 angeordnet. Zudem ist die Aufnahmevorrichtung 30a entlang der Längsachse L und daher orthogonal zur Leiste 3 angeordnet. Das Verbindungselement 4a ist mit einem ersten Ende in die Aufnahmevorrichtung 30a eingeführt und weist mehrere Öffnungen 40 auf.

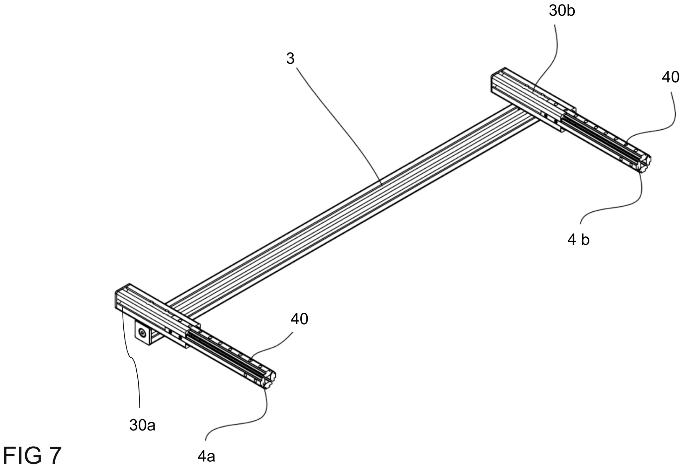

Die Figur 7 zeigt die gesamte Leiste 3 der Figur 6. An beiden Enden der Leiste 3 befindet sich jeweils eine Aufnahmevorrichtung 30a, 30b, in die jeweils ein Verbindungselement 4a, 4b mit einem ersten Ende eingeführt ist. Wenn es sich bei dem vorgeschlagenen Bettgestell A, B, C um ein Einzelbettgestell handelt, dann bestimmt in diesem Beispiel die Länge der Leiste 3 die Breite des Bettgestells A, B, C. Prinzipiell ist es aber auch denkbar, die Aufnahmevorrichtungen 30a, 30b nicht an den Enden der Leiste 3 anzuordnen, in dem Fall kann die Breite des Bettgestells A, B, C eines Einzelbettgestells durch den Abstand der zwei Aufnahmevorrichtungen 30a, 30b bestimmt werden.

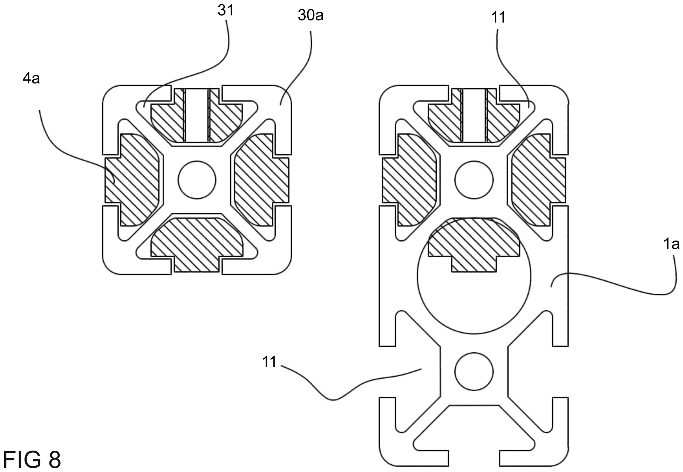

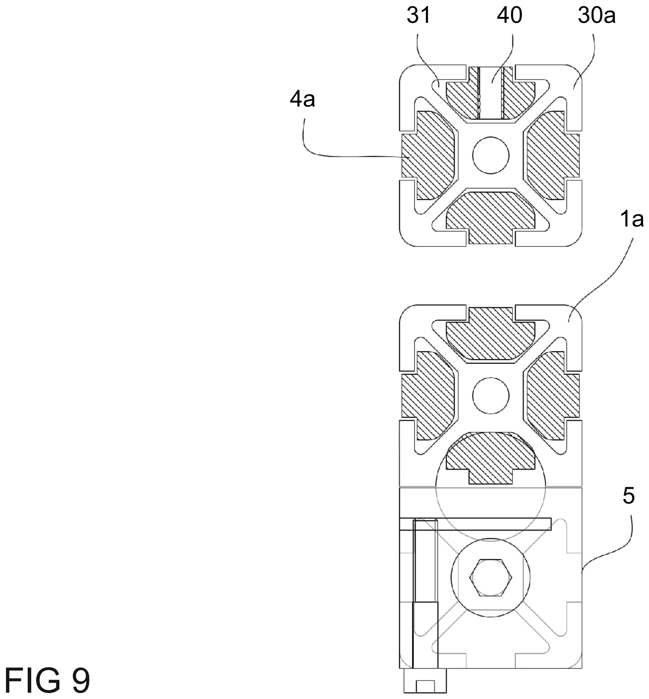

Die Figuren 8 und 9 zeigen einen Querschnitt einer Aufnahmevorrichtung 30a und einer Trägerstruktur 1a eines vorgeschlagenen Bettgestells A, B, C zur Veranschaulichung eines Profilteils der Aufnahmevorrichtung 30a und eines Profilteils der Trägerstruktur 1a. Der Profilteil der Aufnahmevorrichtung 30a umfasst eine quadratische Form mit vier Seiten, wobei jede Seite des Profilteils der Aufnahmevorrichtung 30a eine T-förmige Durchgangsöffnung 31 aufweist. Zudem weist der Profilteil der Aufnahmevorrichtung 30a zwei Diagonalen auf, die gegenüberliegende Ecken der quadratischen Form miteinander verbinden, wobei in der Mitte, in der sich die zwei Diagonalen kreuzen würden, ein kleineres Quadrat mit einem Kreis ausgebildet ist. Ein Verbindungselement 4a kann mit einem ersten Ende formschlüssig in der Aufnahmevorrichtung 30a gelagert werden. Ein solcher Formschluss ist beispielsweise möglich, wenn das erste Ende des Verbindungselementes 4a vier T-förmige Formschlusselemente umfasst. Auf einem der vier T-Förmigen Formschlusselemente des Verbindungselements 4a befinden sich mehrere Öffnungen 40.

Der Profilteil der Trägerstruktur 1a umfasst eine rechteckige Form mit vier Seiten, wobei zwei lange Seiten Profilteils der Trägerstruktur 1a doppelt so lang sind wie die anderen zwei kurzen Seiten des Profilteils der Trägerstruktur 1a. Die zwei kurzen Seiten des Profilteils der Trägerstruktur 1a weisen jeweils eine T-förmige Durchgangsöffnung 11 der Trägerstruktur 1a auf, die zwei langen Seiten weisen jeweils zwei T-förmige Durchgangsöffnungen 11 der Trägerstruktur 1a auf. In der Mitte des zweiten Profils befindet sich ein erster Kreis. Der Profilteil der Trägerstruktur 1a umfasst zudem vier Diagonalen, die jeweils eine Ecke der rechteckigen Form mit einem Mittelpunkt der zwei langen Seiten verbindet, wobei in der Mitte, in der sich zwei Diagonalen der vier Diagonalen kreuzen würden, wie beim Profilteil der Aufnahmevorrichtung 30a ein kleineres Quadrat mit einem zweiten Kreis ausgebildet ist. Der Profilteil der Trägerstruktur 1a, wie in den beiden Figuren 8 und 9 dargestellt, umfasst prinzipiell den Profilteil der Aufnahmevorrichtung 30a zweimal mit der einzigen Änderung, dass der erste Kreis zwischen diesen beiden Profilteilen ausgebildet ist.

Das Verbindungselement 4a kann formschlüssig mit einem zweiten Ende in der Trägerstruktur 1a gelagert werden. Ein solcher Formschluss ist beispielsweise möglich, wenn das zweite Ende des Verbindungselementes 4a vier T-förmige Formschlusselemente umfasst.

In der Figur 8 sind die anderen T-Förmigen Durchgangsöffnungen 11 der Trägerstruktur 1a nicht gefüllt, also leer. In der Figur 9 befindet sich in diesen anderen T-Förmigen Durchgangsöffnungen 11 der Trägerstruktur 1a ein Fixierungselement 5. Das Fixierungselement 5 ist in diesem Beispiel in dem zweiten Kreis befestigt, insbesondere eingeführt, insbesondere eingesteckt. Das Fixierungselement 5 in diesem Beispiel umfasst einen Klemmstein, der das Verbindungselement 4a in einer Verstellposition in der Trägerstruktur 1a fixiert.

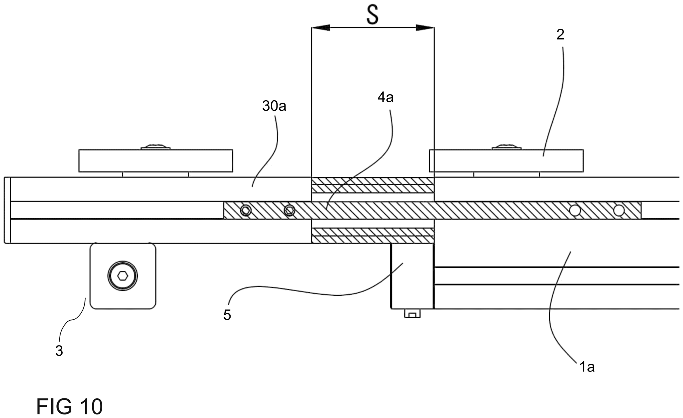

Die Figur 10 zeigt eine perspektivische Seitenansicht eines Ausschnitts eines vorgeschlagenen Bettgestells A, B, C. Ein Verbindungselement 4a ist mit einem ersten Ende in einer Aufnahmevorrichtung 30a verstellbar gelagert und mit einem zweiten Ende in einer Trägerstruktur 1a verstellbar gelagert. Der Abstand S beschreibt den Abstand zwischen der Trägerstruktur 1a und der Aufnahmevorrichtung 30a. Der Abstand S ist abhängig davon, wie tief das erste Ende des Verbindungselementes 4a in der Aufnahmevorrichtung 30a eingeführt ist und wie tief das zweite Ende des Verbindungselementes 4a in die Trägerstruktur 1a eingeführt ist. Der Abstand S kann durch eine Verstellung des Verbindungselementes 4a verändert, also vergrößert oder verringert, werden. Vorliegend fixiert allerdings ein Fixierungselement 5 das Verbindungselement 4a in einer Verstellposition in der Trägerstruktur 1a. Dementsprechend müsste für eine Verstellung des Verbindungselementes 4a in Bezug auf die Trägerstruktur 1a die Fixierung erst aufgelöst werden. Dazu müsste das Fixierungselement 5 von der Trägerstruktur 1a entfernt werden.

### Bezugszeichenliste

- 1a, 1aa, 1b, 1bb: Trägerstruktur
- 11: Durchgangsöffnung der Trägerstruktur
- 2: Bettlatten
- 3: Leiste
- 30a, 30b: Aufnahmevorrichtung
- 31: Durchgangsöffnung der Aufnahmevorrichtung
- 4a, 4b: Verbindungselement
- 40: Öffnung
- 5: Fixierungselement
- 6a, 6b: Seitenwände des Fahrzeugs
- 7: Lochwand
- 8: Befestigungselement
- 90: Matratze
- 91: Schiene
- A, B, C: Bettgestell
- L: Längsachse
- S: Abstand zwischen einer Aufnahmevorrichtung und einer Trägerstruktur
- Q: Querachse

## Patentansprüche

1. Bettgestell für ein Fahrzeug, umfassend:
- mindestens zwei Trägerstrukturen (1a, 1aa, 1b, 1bb) für das Tragen eines Lattenrostes, wobei die mindestens zwei Trägerstrukturen (1a, 1aa, 1b, 1bb) sich parallel zueinander entlang einer Längsachse (L) erstrecken, und orthogonal zu der Längsachse (L) sich Bettlatten (2) des Lattenrostes erstrecken,
- mindestens eine Leiste (3) zur Verbindung der mindestens zwei Trägerstrukturen (1a, 1aa, 1b, 1bb) miteinander, wobei die mindestens eine Leiste (3) orthogonal zu der Längsachse (L) angeordnet ist und mindestens zwei Aufnahmevorrichtungen (30a, 30b) für die Verbindung der mindestens einen Leiste (3) mit jeweils einer der mindestens zwei Trägerstrukturen (1a, 1aa, 1b, 1bb) umfasst, und
- mindestens zwei Verbindungselemente (4a, 4b), wobei jedes Verbindungselement (4a, 4b) der mindestens zwei Verbindungselemente (4a, 4b) mit einem ersten Ende in eine der mindestens zwei Aufnahmevorrichtung (30a, 30b) eingeführt ist und mit einem zweiten Ende in eine der mindestens zwei Trägerstrukturen (1a, 1aa, 1b, 1bb) eingeführt ist, um die eine Aufnahmevorrichtung (30a, 30b) mit der einen Trägerstruktur (1a, 1aa, 1b, 1bb) zu verbinden,
**dadurch gekennzeichnet, dass**
das erste Ende jedes Verbindungselementes (4a, 4b) entlang der Längsachse (L) verstellbar in der einen Aufnahmevorrichtung (30a, 30b) gelagert ist, und/oder das zweite Ende jedes Verbindungselementes (4a, 4b) entlang der Längsachse (L) verstellbar in der einen Trägerstruktur (1a, 1aa, 1b, 1bb) gelagert ist.

2. Bettgestell nach Anspruch 1, **dadurch gekennzeichnet, dass** die mindestens zwei Aufnahmevorrichtungen (30a, 30b) jeweils mit einem Profilteil ausgebildet sind.

3. Bettgestell nach Anspruch 2, **dadurch gekennzeichnet, dass** das erste Ende jedes Verbindungselementes (4a, 4b) über einen Formschluss an dem jeweiligen Profilteil der Aufnahmevorrichtung (30a, 30b) gehalten und verschieblich gelagert ist.

4. Bettgestell nach mindestens einem der vorhergehenden Ansprüche, **dadurch gekennzeichnet, dass** die mindestens zwei Trägerstrukturen (1a, 1aa, 1b, 1bb) jeweils mit einem Profilteil ausgebildet sind.

5. Bettgestell nach Anspruch 4, **dadurch gekennzeichnet, dass** das zweite Ende jedes Verbindungselementes (4a, 4b) über einen Formschluss an dem jeweiligen Profilteil der Trägerstruktur (1a, 1aa, 1b, 1bb) gehalten und verschieblich gelagert ist.

6. Bettgestell nach Anspruch 2 oder 3 und nach Anspruch 4 oder 5, **dadurch gekennzeichnet, dass** das Profilteil einer Trägerstruktur (1a, 1aa, 1b, 1bb) länger ist als das Profilteil einer Aufnahmevorrichtung (30a, 30b).

7. Bettgestell nach mindestens einem der vorhergehenden Ansprüche, **dadurch gekennzeichnet, dass** jedes Verbindungselement (4a, 4b) mehrere Öffnungen (40) zur Befestigung der Bettlatten (2) umfasst.

8. Bettgestell nach Anspruch 7, **dadurch gekennzeichnet, dass** die mindestens zwei Aufnahmevorrichtungen (30a, 30b) jeweils mindestens eine Durchgangsöffnung (31) aufweisen, über die Öffnungen (40) an dem ersten Ende zugänglich sind, und die mindestens zwei Trägerstrukturen (1a, 1aa, 1b, 1bb) jeweils mindestens eine Durchgangsöffnung (11) aufweisen, über die Öffnungen (40) an dem zweiten Ende zugänglich sind.

9. Bettgestell nach Anspruch 2 oder 3 und nach Anspruch 8, **dadurch gekennzeichnet, dass** jedes Profilteil der mindestens zwei Aufnahmevorrichtungen (30a, 30b) die mindestens eine Durchgangsöffnung (31) umfasst und das die mindestens eine Durchgangsöffnung (31) im Querschnitt T-förmig ausgestaltet ist.

10. Bettgestell nach Anspruch 4, 5 oder 6 und nach Anspruch 8, **dadurch gekennzeichnet, dass** jedes Profilteil der mindestens zwei Trägerstrukturen (1a, 1aa, 1b, 1bb) die mindestens eine Durchgangsöffnung (11) umfasst und das die mindestens eine Durchgangsöffnung (11) im Querschnitt T-förmig ausgestaltet ist.

11. Bettgestell nach mindestens einem der vorhergehenden Ansprüche, **dadurch gekennzeichnet, dass**
das Bettgestell ein Fixierungselement (5), insbesondere in Form eines Klemmsteins oder eines Gewindestifts, umfasst, über das ein Verbindungselement (4a, 4b) in einer Verstellposition in der jeweiligen Aufnahmevorrichtung (30a, 30b) oder in einer Verstellposition in der jeweiligen Trägerstruktur (1a, 1aa, 1b, 1bb) fixiert wird und/oder
das Bettgestell an zwei gegenüberliegenden Lochwänden (7) des Fahrzeuges über Befestigungselemente (8) befestigbar ist, die an der mindestens einen Leiste (3) angeordnet sind.

12. Bettgestell nach mindestens einem der vorhergehenden Ansprüche, **dadurch gekennzeichnet, dass**
die mindestens einen Leiste (3) von den mindestens zwei Verbindungselementen (4a, 4b) werkzeuglos entfernbar ist und/oder
das Bettgestell mindestens vier Trägerstrukturen (1a, 1aa, 1b, 1bb) umfasst und zwei der mindestens vier Trägerstrukturen (1a, 1aa, 1b, 1bb) entlang einer Querachse (Q), die orthogonal zu der Längsachse (L) verläuft, von einer ersten Position in eine zweite Position verstellbar sind, in der über das Bettgestell eine größere Liegefläche definiert ist als in der ersten Position.

13. Fahrzeug mit einem in einen Innenraum des Fahrzeugs eingebauten Bettgestell nach mindestens einem der vorhergehenden Ansprüche.

14. Fahrzeug nach Anspruch 13, **dadurch gekennzeichnet, dass** das Bettgestell quer zur Fahrtrichtung des Fahrzeuges eingebaut ist.

15. Fahrzeug nach Anspruch 13 oder 14, **dadurch gekennzeichnet, dass** das Bettgestell in verschiedenen Höhen einbaubar ist.
